(19) Europäisches Patentamt

European Patent Office

Office européen des brevets

(11) Veröffentlichungsnummer: **0 333 982**
**A1**

## (12) EUROPÄISCHE PATENTANMELDUNG

(21) Anmeldenummer: 89100643.9

(22) Anmeldetag: 14.01.89

(51) Int. Cl.⁴: **F16L 5/02 , H02G 3/22**

(30) Priorität: 24.03.88 DE 3809884

(43) Veröffentlichungstag der Anmeldung:
27.09.89 Patentblatt 89/39

(84) Benannte Vertragsstaaten:
AT BE CH ES FR GB IT LI NL SE

(71) Anmelder: PLASTOFORM GMBH & CO. KG
Burgstrasse 25
D-4973 Vlotho(DE)

(72) Erfinder: Hauff, Werner
Herlsbühlstrasse 19
D-7925 Dischingen-Ballmertshofen(DE)

(74) Vertreter: Fay, Hermann, Dipl.-Phys. Dr. et al
Dipl.-Phys. Hermann Fay und Dr. Joachim
Dziewior Ensingerstrasse 21 Postfach 17 67
D-7900 Ulm/Donau(DE)

(54) Durchführung für Leitungen, wie Kabel Rohre oder dergl. durch eine Wandöffnung.

(57) Die Durchführung besteht aus einem die Wand-öffnung rundum begrenzenden Rahmen (4) und aus zwei in der Wandöffnung in Leitungslängsrichtung hintereinander angordneten Dichtwänden (50) aus jeweils Paßplatten (7), die gegeneinander, gegen die Leitungen (1) und gegen die Laibungsfläche (6) des Rahmens (4) abdichten, und aus einer die Paßplatten (7) im Rahmen (4) verpressenden Druckvorrichtung (9) mit einer Preßplatte (10). Die Paßplatten (7) und die Preßplatten (10) sind je in zwei in Leitungslängsrichtung hintereinander liegende und kraftschlüssig miteinander verbundene Stücke unterteilt, von wel-chen die an den Dichtwänden (50) einander zugewandten Innenstücke (7.1, 10.1) aus einem elastisch weich eingestellten Kautschuk und die an den beiden Dichtwänden (50) voneinander abgewandten Außenstücke (7.2, 10.2) aus einem durch Zugabe von Flammschutzmitteln elastisch hart eingestellten Kaut-schuk bestehen. An jeder Dichtwand (50) ist ein dem Außenstück (10.2) anliegender Teil des Innenstücks (10.1) der Preßplatte (10) in Leitungslängsrichtung gegen das Außenstück (10.2) verspannt. Im unver-spannten Teil (10.1') des Innenstücks (10.1) ist ein sich im Brandfall zum Innenraum (51) zwischen beiden Dichtwänden (50) hin öffnender Hohlraum (52) mit einer Füllung aus einem Flammschutzmittel vor-gesehen.

Fig.1

## Durchführung für Leitungen, wie Kabel, Rohre oder dergl., durch eine Wandöffnung.

Die Erfindung betrifft eine Durchführung für Leitungen, wie Kabel, Rohre oder dergl. durch eine Wandöffnung, bestehend aus einem die Wandöffnung rundum begrenzenden Rahmen mit einer Laibungsfläche an jeder Rahmenseite und aus zwei in der Wandöffnung in Leitungslängsrichtung mit freiem Abstand zwischen sich hintereinander angeordneten, jeweils die Rahmenöffnung füllenden Dichtwänden aus jeweils Paßplatten, die gegeneinander, gegen die Leitungen und gegen die Laibungsfläche abdichten, und aus einer die Paßplatten im Rahmen verpressenden Druckvorrichtung mit einer Preßplatte.

Bekannte Durchführungen dieser Art dienen dazu, einen Feuerschutzabschluß zu bilden, durch den Leitungstrassen zwischen verschiedenen, durch die Wand voneinander getrennten Brandabschnittzonen feuerbeständig abgeschottet werden. Außer einer möglichst langen Feuerwiderstandsdauer soll die Durchführung außerdem die Eigenschaft einer möglichst guten Abdichtung gegen Wasser, Gas und Rauch besitzen. Durchführungen dieser Art sind in der nicht vorveröffentlichten deutschen Patentanmeldung P 37 27 159.8 beschrieben. Bei ihnen besitzt die Druckvorrichtung zwei Preßplatten, die keilförmiges Profil mit geneigt zur Leitungslängsrichtung verlaufenden Keilflächen aufweisen und an diesen Keilflächen so aneinander liegen, daß sich das dicke Keilende der einen Preßplatte am dünnen Keilende der jeweils anderen Preßplatte befindet. Werden die beiden Preßplatten mit Hilfe von Spannplatten und Spannschrauben an ihren Keilflächen übereinander geschoben, so vergrößert sich ihre Gesamtdicke und entsprechend werden die Paßplatten im Rahmen verpreßt. Im übrigen kann noch eine der Preßplatten zwischen zwei Spannplatten nachgespannt werden, wodurch diese Preßplatte quer zur Rahmenebene komprimiert und eine weitere Verpressung der Paßplatten erreicht wird. Die Preßplatten und die Paßplatten bestehen aus einem Kunstkautschuk, wie Neopren oder Chloropren, dem zur Erzielung hoher Feuerwiderstandsdauer Flammschutzmittel, Blähmittel und dergl. beigefügt sind. Hierfür ist aus DE-OS 34 25 429 insbes. Aluminiumhydroxid Al(OH)₃ bekannt, daß sich in der Erwärmung des Brandfalls unter erheblicher Wärmeaufnahme zersetzt und Wasser abspaltet, das dampfförmig freigesetzt wird. Die Wärmeaufnahme wirkt dabei im Sinne einer Kühlung der Leitungen und der Durchführungteile in der Brandzone und das entstehende Wasser, da es an der Brandstelle Sauerstoff verdrängt, im Sinne eines flammhemmenden Schutzgases. Jedoch ist die Beimischung eines solchen Flammschutzmittels zu Kautschuk auf vergleichsweise geringe Mengen begrenzt, weil die Beimischung die technischen Werte der Kautschukmischung sehr stark beeinträchtigt. So ergibt die Beimischung dieser Zusätze eine elastisch sehr harte Einstellung des Kautschuks, und zwar schon bei vergleichsweise nur geringen Zusatzmengen. Werden daher der Kautschukmischung die Zusätze in einer im Hinblick auf die Feuerwiderstandsdauer an sich gewünschten Menge zugegeben, so werden dadurch die Paßplatten und die Preßplatten elastisch so hart, daß sie auch bei hohen Preßkräften der Druckvorrichtung keine ausreichende Abdichtung der Durchführung gegen Wasser, Gas und Rauch mehr ergeben, da hierfür ein elastisch möglichst weich eingestellter Kautschuk erforderlich ist, damit sich die Paßplatten bzw. Preßplatten beim Verpressen im Rahmen dichtschließend aneinander, an die Leitungen und an die Laibung des Rahmens anlegen können.

Der Erfindung liegt die Aufgabe zugrunde, eine Durchführung der eingangs genannten Art so auszubilden, daß eine gute Dichtigkeit bei trotzdem langer Feuerwiderstandsdauer erzielt wird, ohne daß dazu die Druckvorrichtung besonders große Preßkräfte erzeugen muß.

Diese Aufgabe wird nach der Erfindung dadurch gelöst, daß die Paßplatten und die Preßplatten je in zwei in Leitungslängsrichtung hintereinander liegende und kraftschlüssig miteinander verbundene Stücke unterteilt sind, von welchen die an den Dichtwänden einander zugewandten Innenstücke aus einem elastisch weich eingestellten Kautschuk und die an den beiden Dichtwänden voneinander abgewandten Außenstücke aus einem durch Zugabe von Flammschutzmitteln elastisch hart eingestellten Kautschuk bestehen, daß an jeder Dichtwand ein dem Außenstück anliegender Teil des Innenstücks der Preßplatte in Leitungslängsrichtung gegen das Außenstück verspannt ist und daß im unverspannten Teil des Innenstücks der Preßplatte jeder Dichtwand ein sich im Brandfall zum Innenraum zwischen beiden Dichtwänden hin öffnender Hohlraum mit einer Füllung aus einem Flammschutzmittel, insbes. einem Flammschutzmittel, das sich bei Erwärmung im Brandfall unter Wärmeaufnahme (endogen) zersetzt und ein flammhemmendes Schutzgas abspaltet, wie Aluminiumhydroxid Al(OH)₃, vorgesehen ist.

Bei der erfindungsgemäßen Durchführung übernehmen die der Brandeinwirkung zuerst und unmittelbar ausgesetzten Außenstücke der Preßplatte und der Paßplatten zusammen mit dem in den Hohlräumen der Innenstücke der Preßplatte enthaltenen Flammenschutzmittel die Feuerwiderstands- und Flammschutzfunktion, die Innenstücke die Dichtfunktion der Durchführung. Die Außenstücke können daher hohe Anteile an Flammschutzmitteln, Blähmitteln und dergl. enthalten, denn die damit verbundene elastische Härte bleibt auf die Dichtfunktion der Innenstücke ohne Einfluß. Die Innenstücke, die der unmittelbaren Brandeinwirkung zunächst entzogen sind und zur Feuerwiderstands- und Flammschutzfunktion nur wenig, wenn überhaupt etwas, beitragen, enthalten solche Zusätze in nur geringer Menge oder sind überhaupt frei davon, so daß sie sehr weichelastisch sind. Sie erfahren jedoch einen Schutz durch das in den Hohlräumen der Innenstücke der Preßplatten enthaltene Flammschutzmittel, das mit zunehmender Brandeinwirkung und fortschreitendem Abbrand der Außenstücke frei wird. Dabei ist die Menge des Flammschutzmittels nicht durch die Möglichkeit seiner Beimischung zu anderen Werkstoffen, sondern nur durch die Größe der zu seiner Aufnahme in den Innenstücken zur Verfügung stehenden Hohlräume begrenzt, was den Einsatz erheblich größerer Mengen an Flammschutzmittel als im Falle nur seiner Beimischung zu anderen Werkstoffen ermöglicht. Im Innenraum zwischen den Dichtwänden gelangt das im Brandfall aus dem Flammschutzmittel frei werdende Schutzgas, im Fall von Aluminiumhydroxid also Wasserdampf, unmittelbar an die Leitungen, an die Innenstücke und an die Laibung des Innenraums, die in vielen Fällen durch ein in die Wand eingelassenes Futterrohr aus Kunststoff gebildet ist. Die weichelastische Einstellung der Innenstücke ergibt auch ohne große Preßkräfte schon eine zuverlässige Dichtwirkung über die gesamte Dichtwand. Es genügt daher schon die Verpressung der Innenstücke durch die Kompression nur einer einzigen Preßplatte. Die zur Kompression der Preßplatte erforderlichen Stauchkräfte sind wegen der elastischen Weichheit des im wesentlichen allein der Kompression unterliegenden Innenstücks der Preßplatte ebenfalls entsprechend gering. Im Ergebnis wird nicht nur eine einfachere Konstruktion und Montage der Druckvorrichtung, sondern durch die Trennung der Feuerwiderstandsfunktion und der Dichtfunktion voneinander auch erreicht, daß Feuerwiderstandsdauer und Dichtigkeit unabhängig voneinander und in jeweils optimaler Weise eingestellt werden können. Die Außen- und Innenstücke bestehen beispielsweise aus Chloropren- oder NeoprenKautschuk, wobei die Mittelstücke eine Shore-Härte von maximal 55° oder weniger, die Außenstücke eine solche von mindestens 60° oder mehr haben.

Vorzugsweise sind die beiden Stücke der Preßplatten bzw. Paßplatten jeweils miteinander verklebt. Die im wesentlichen quer zur Leitungslängsrichtung verlaufende Fläche, in der das Innenstück dem Außenstück anliegt, kann in Leitungslängsrichtung und konvex zu dem Außenstück hin gewölbt sein, so daß sich Druckdifferenzen beidseits der Preßplatten von außen her gewölbemäßig auf die Innenstücke abtragen und sich dadurch eine gute Querfestigkeit der Paßplatten und der Preßplatten insgesamt ergibt. Um die Abdichtung der Innenstücke gegen die Laibung des Rahmens noch zu verbessern, sind nach einem weiteren Vorschlag der Erfindung die Innenstücke an ihren Enden mit je einem in Leitungslängsrichtung verbreiterten Flansch versehen, dessen Ränder formschlüssig in Falzen der Außenstücke liegen. Im einzelnen wird man die Ausbildung zweckmäßig so treffen, daß sich der Flansch zum Ende hin in der Dicke verjüngt und das Profil des Falzes eine sich entsprechend verringernde Tiefe aufweist.

Eine weiter bevorzugte Ausführungsform ist dadurch gekennzeichnet, daß in die Außen- und die Innenstücke der Preßplatte im wesentlichen senkrecht zur Leitungslängsrichtung stehende starre Spannplatten, vorzugsweise aus Metall, eingelassen und mit in Leitungslängsrichtung verlaufenden Spannankern durch den gegen das Außenstück zu verspannenden Teil des Innenstückes hindurch miteinander verbunden sind, und daß sich der Hohlraum mit dem Flammschutzmittel, gesehen vom Innenraum zwischen den Dichtwänden aus, im Innenstück vor der Spannplatte befindet. Dies bringt insgesamt den Vorteil, daß die Spannplatten und die Köpfe der Spannanker nach außen von den Außenstücken überdeckt und somit der unmittelbaren Brandeinwirkung entzogen sind. Vom Innenraum zwischen den Dichtwänden aus gesehen, liegen die Spannplatten hinter den das Flammschutzmittel enthaltenden Hohlräumen, so daß die Spannplatten die Abgabe dieses Flammschutzmittels in den Innenraum nicht behindern können. Im einzelnen können die Außenstücke für jeden Spannanker eine Durchgangsbohrung zur Aufnahme des Spannankerkopfes aufweisen, in der der Spannankerkopf versenkt angeordnet und durch einen Stopfen aus demselben Material wie das Außenstück verdeckt ist. Zweckmäßigerweise sind die Spannanker Gewindebolzen, auf welchen Spannmuttern als Spannankerköpfe sitzen. Vorzugsweise sind die Spannmuttern als Hutmuttern ausgebildet. Mit ihrer vorgegebenen Huttiefe ermöglichen die Hutmuttern in besonders einfacher Weise eine Begrenzung des Spannweges bei der Verpressung des Innenstücks der Preßplatte. Zusätzlich zu den Spannankern können Führungsstifte vorgesehen sein, welche die Spannplatten verbinden und auf denen die Spannplatten mit Führungsbohrungen parallel zueinander geführt sind. Dies ergibt bei der Kompression eine gleichmäßige Kraftbeanspruchung des gegen das Außenstück zu verspannenden Teils des Innenstücks über dessen gesamte Fläche. Auch die Enden der Führungsstifte sind zweckmäßigerweise in den Außenstücken der Preßplatte versenkt angeordnet und nach außen hin vom Außenstück überdeckt.

Eine besonders vorteilhafte Ausführungsform ist dadurch gekennzeichnet, daß die Spannplatten das Innenstück und das Außenstück in jeweils zwei Teile trennen, von welchen das zum Innenraum zwischen beiden Dichtwänden hin liegende innere Teil des Innenstücks den Hohlraum mit dem Flammschutzmittel aufweist, daß die beiden Teile von Innen- und Außenstück die Enden der Spannplatten zu der Laibungsfläche hin übergreifen und abdecken, und daß das Außenstück mit seinen beiden Teilen, die Spannplatten und das dem Außenstück anliegende Teil des Innenstücks auf den Spannankern und/oder den Führungsstiften geführt sind.

Hinsichtlich des Hohlraums sind im Rahmen der Erfindung verschiedene Ausführungsformen möglich. So geht ein Vorschlag der Erfindung dahin, daß der Hohlraum von einer zum Innenraum zwischen beiden Dichtwänden hin offenen taschenartigen Aussparung des Innenstücks gebildet ist, in die ein die Aussparung verschließender Deckel gesetzt ist. Nach einem anderen Vorschlag ist in den Hohlraum ein das Flammschutzmittel enthaltendes dünnwandiges Behältnis eingesetzt. In beiden Fällen ist durch den Deckel bzw. die dünne Behältniswand sicher gestellt, daß mit zunehmender Brandeinwirkung das Flammschutzmittel zum richtigen Zeitpunkt während des Abbrands der Dichtwand frei wird.

Im folgenden wird die Erfindung an einem in der Zeichnung dargestellten Ausführungsbeispiel näher erläutert; es zeigen:

Fig. 1 in einer Schrägdarstellung teilweise geschnitten eine Durchführung nach der Erfindung in einer Betonwand,

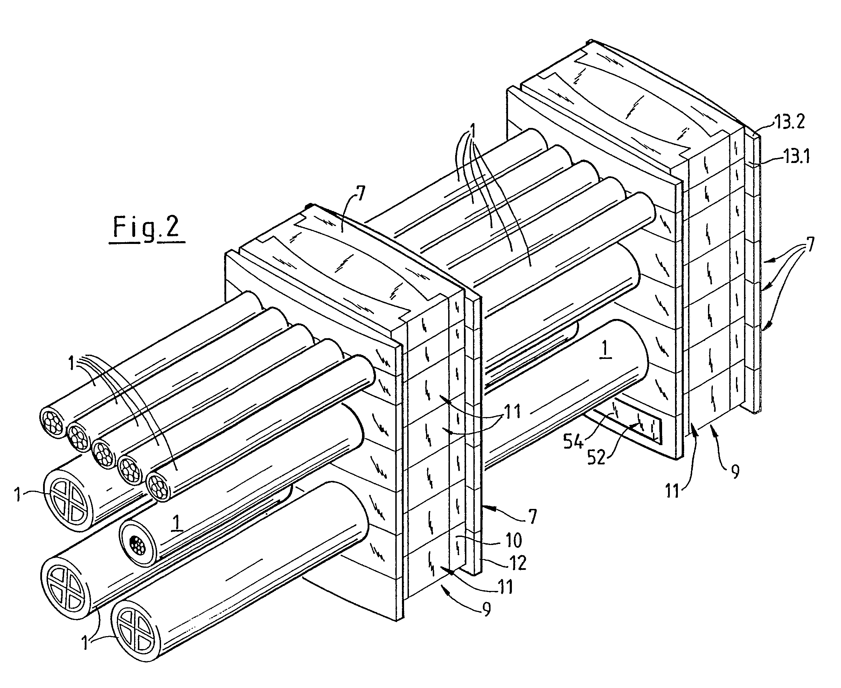

Fig. 2 die Durchführungteile zusammen mit den Leitungen der Durchführung nach Fig. 1 ohne Wiedergabe der Wand bei im übrigen der Fig. 1 entsprechender Darstellung,

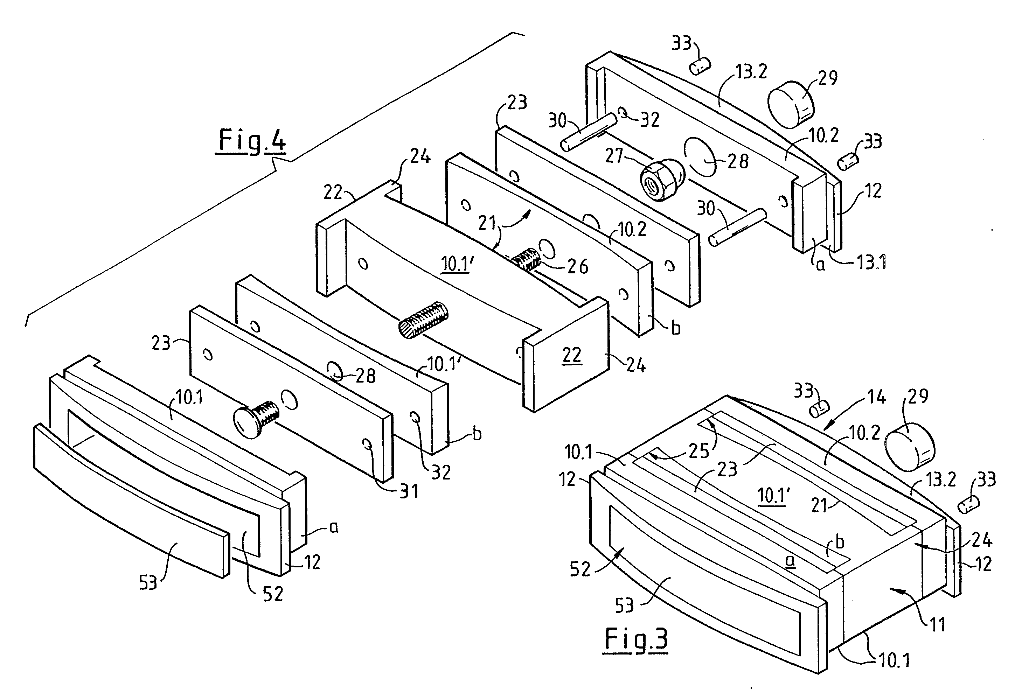

Fig. 3 die Druckvorrichtung der Durchführung nach den Fig. 1 und 2 in einer Einzeldarstellung im zusammengesetzten Zustand,

Fig. 4 den Gegenstand der Fig. 3 im auseinander gezogenen Zustand, und

Fig. 5 eine Paßplatte der Durchführung nach den Fig. 1 und 2 in einer Einzeldarstellung in einer Ausführungsform ohne Leitungsaufnahmen.

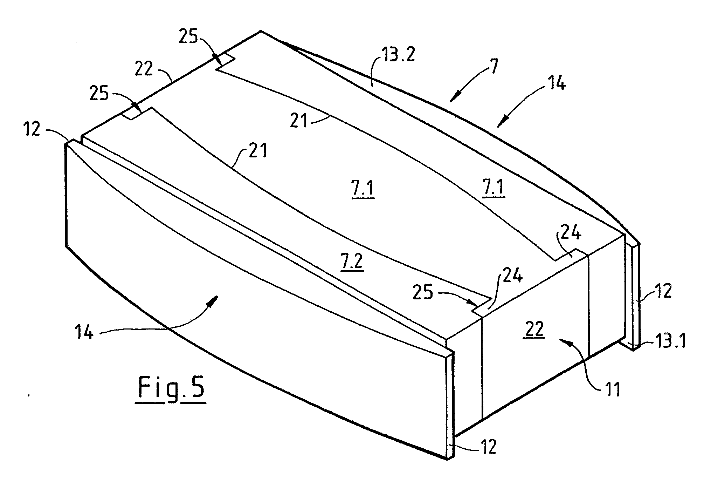

In der Zeichnung sind die Leitungen 1, nämlich elektrische Kabel verschiedenen Durchmessers, jeweils nur zum Teil dargestellt. Die Leitungen 1 laufen durch eine Wandöffnung 2 in einer Betonwand 3. Die Durchführung umfaßt einen die Wandöffnung 2 rundum begrenzenden wandfesten Rahmen 4, an dessen sich paarweise gegenüber liegenden Rahmenseiten zwei in Leitungslängsrichtung hintereinander liegende Rahmenseitenflächen 5, 5' und dazwischen eine in den Rahmenseitenflächen nach innen in die Wandöffnung 2 gerichtete Laibungsfläche 6 ausgebildet sind. Die Durchführung umfaßt ferner zwei in der Wandöffnung in Leitungslängsrichtung mit freiem Abstand zwischen sich hintereinander angeordneten und jeweils die Rahmenöffnung füllenden Dichtwänden 50. Jede 50 Dichtwand besteht aus Paßplatten 7, die gegeneinander, gegen die Leitungen 1 und gegen die Laibungsfläche 6 des Rahmens 4 abdichten. Die Paßplatten 7 bilden den Leitungsquerschnitten entsprechende Leitungsaufnahmen, die von den Trennflächen 8 zwischen den Paßplatten 7 geschnitten werden. In der Fig. 5 ist der Einfachheit wegen keine dieser Leitungsaufnahmen dargestellt. Der zur Abdichtung benötigte Dichtungsdruck wird von einer die Paßplatten 7 im Rahmen 4 elastisch verpressenden Druckvorrichtung 9 ausgeübt. Diese Druckvorrichtung 9 umfaßt je Dichtwand 50 eine einzige innerhalb des Rahmens 4 liegende Preßplatte 10, die in noch näher zu erläuternder Weise im Rahmen 4 verspannt werden kann.

Im einzelnen reichen die Paßplatten 7 und die Preßplatte 10 einteilig quer über die Wandöffnung 2 von einer zur gegenüber liegenden anderen Rahmenseite, wobei diese Rahmenseiten im Ausführungsbeispiel die vertikal ausgerichteten Längsseiten des Rahmens 4 sind. An beiden Enden liegen die Preßplatten 7 mit ihren Stirnflächen 11 der Laibungsfläche 6 an. Außerdem sind sie dort mit nach außen über die Rahmenseitenflächen 5, 5' greifenden Verankerungsnasen 12 versehen, welche die Paßplatten 7 und die Preßplatte 10 durch Anschlag an den Rahmenseitenflächen 5, 5' in Leitungslängsrichtung am Rahmen 4 fixieren. Die Paßplatten 7 sind an den Trennflächen 8 ebenso wie die Preßplatte 10 mit einander zugeordneten, quer zur Leitungslängsrichtung verlaufenden Leisten 13.1 und Falzen 13.2 versehen, über die die benachbarten Paßplatten 7 an der Trennfläche 8 in Leitungslängsrichtung formschlüssig miteinander in Eingriff stehen. Der gleiche Eingriff erfolgt zwischen der Preßplatte 10 und der ihr anliegenden Paßplatte 7. Die Paßplatten 7 und die Preßplatten 10 sind an den quer zur Leitungslängsrichtung verlaufenden Querflächen 14 konvex gewölbt.

Zwischen den Dichtwänden 50 ist die Laibung von einem in die Wand 3 eingebetteten Futterrohr 22' gebildet, dessen Mantel die äußere Begrenzung der innen liegenden Rahmenseitenflächen 5' bildet und doppelwandig ausgebildet ist. Im Wandzwischenraum 22'' können feuerhemmende Substanzen enthalten sein, die im Brandfall frei werden und durch ihre flammhemmende bzw. kühlende Wirkung die Feuerwiderstandsdauer der Durchführung erheblich erhöhen können.

Die Paßplatten 7 und die Preßplatten 10 sind je in zwei in Leitungslängsrichtung hintereinander liegende und kraftschlüssig miteinander verbundene, insbes. miteinander verklebte Stücke 7.1, 7.2 bzw 10.1, 10.2 unterteilt. Die an den Dichtwänden 50 einander zugewandten, also zum Innenraum 51 zwischen den Dichtwänden 50 hin liegenden Innenstücke 7.1, 10.2 bestehen aus einem elastisch weich eingestellten Kautschuk, wie Neopren oder Chloropren mit einer Shore-Härte von weniger als 50°. Die an beiden Dichtwänden 50 voneinander abgekehrten, also zur Wandaußenseite hin gewandten Außenstücke 7.2, 10.2 bestehen aus einem durch Zugabe von Flammschutzmitteln elastisch hart eingestellten Kautschuk mit einer Shore-Härte von mehr als 65°. An jeder Dichtwand 50 ist ein dem Außenstück 10.2 anliegender Teil des Innenstücks 10.1′ der Preßplatte 10 in Leitungslängsrichtung gegen das Außenstück 10.2 verspannt. Im unverspannten Teil des Innenstücks 10.1 der Preßplatte 10 ist ein sich im Brandfall zum Innenraum 51 zwischen beiden Dichtwänden 50 hin öffnender Hohlraum 52 vorgesehen, in dem sich eine Füllung aus einem Flammschutzmittel befindet, insbes. einem Flammschutzmittel, das sich bei Erwärmung im Brandfall unter Wärmeaufnahme (endogen) zersetzt und ein flammhemmendes Schutzgas abspaltet, wie beispielsweise Aluminiumhydroxid Al(OH)$_3$, das Wasser abspaltet.

Die im wesentlichen quer zur Leitungslängsrichtung den Außenstücken 7.2, 10.2 anliegenden Flächen 21 der Innenstücke 7.1, 10.1 sind in Leitungslängsrichtung und konvex zu den Außenstücken 7.2, 10.2 hin gewölbt. Die Innenstücke 7.1, 10.1 besitzen an ihren Enden je einen in Leitungslängsrichtung verbreiterten Flansch 22, dessen Ränder 24 formschlüssig in Falzen 25 der Außenstücke 7.2, 10.2 liegen. Der Flansch 22 verjüngt sich zu den Rändern 24 hin in der Dicke und entsprechend besitzt das Falzprofil 25 eine sich verringernde Tiefe.

In die Außenstücke 10.2 und in die Innenstücke 10.1 der Preßplatte 10 sind im wesentlichen senkrecht zur Leitungslängsrichtung stehende starre Spannplatten 23, vorzugsweise aus Metall, eingelassen und mit in Leitungslängsrichtung verlaufenden Spannankern 26 durch den gegen das Außenstück 10.2 zu verspannenden Teil 10.1′ des Innenstücks 10.1 hindurch miteinander verbunden. Der Hohlraum 52 mit dem Flammschutzmittel befindet sich, gesehen vom Innenraum 51 zwischen den Dichtwänden 50 aus, im Innenstück 10.1 vor der Spannplatte 23. Die Spannplatten 23 und die Köpfe 27 der Spannanker 26 sind nach außen von den Außenstücken 10.2 der Preßplatte 10 überdeckt. Die Außenstücke 10.2 besitzen für jeden Spannanker 26 eine Durchgangsbohrung 28 zur Aufnahme des Spannankerkopfes 27. In dieser Aufnahme ist der Spannankerkopf 27 versenkt angeordnet und durch einen in die Aufnahme eingedrückten Stopfen 29 aus demselben Werkstoff wie das Außenstück 10.2 verdeckt, so daß der Spannankerkopf 27 der unmittelbaren Brandeinwirkung zunächst entzogen ist. Im einzelnen sind die Spannanker 26 Gewindebolzen, auf welchen Spannmuttern als Spannankerköpfe 27 sitzen, die als Hutmuttern ausgebildet sind. Zusätzlich zu den Spannankern 26 sind Führungsstifte 30 vorgesehen, welche die Spannplatten 23 verbinden und auf denen die Spannplatten mit Führungsbohrungen 31 parallel zueinander geführt sind. Auch die Enden dieser Führungsstifte 30 sind in den Außenstücken 10.2 der Preßplatten 10 versenkt angeordnet und nach außen von den Außenstücken 10.2 überdeckt, wozu wiederum Durchgangsbohrungen 32 vorgesehen sein können, die durch Stopfen 33 verschlossen sind. Die Spannplatten trennen das Innenstück 10.1 und das Außenstück 10.2 in jeweils zwei Teile a a, b, b, von welchen das zum Innenraum 51 zwischen beiden Dichtwänden 50 hin liegende innere Teil 10.1 a des Innenstücks 10.1 den Hohlraum 52 mit dem Flammschutzmittel aufweist und das dem Außenstück 10.2 anliegende Teil 10.1b gegen das Außenstück 10.2 verpreßt wird. Die beiden Teile a, b des Innenstücks 10.1 und des Außenstücks 10.2 übergreifen die Enden der Spannplatten 23 zu der Laibungsfläche 6 hin und decken die Enden ab, so daß die Abdichtung gegen die Laibung des Rahmens 4 nicht beeinträchtigt wird. Das Außenstück 10.2 mit seinen beiden Teilen a, b, die Spannplatten 23 und das dem Außenstück 10.2 anliegende Teil b des Innenstücks 10.1 sind auf den Spannankern 26 und/oder den Führungsstiften 30 geführt. Im einzelnen ist im Ausführungsbeispiel nur ein einziger mittig angeordneter Spannanker 26 vorgesehen, beidseits dessen sich je ein Führungsstift 30 befindet.

Wird die Preßplatte 10 mit dem Spannanker 26 horizontal komprimiert, dehnt sich der gegen das Außenstück 10.2 verpreßte Teil 10.1′ des Innenstückes 10.1 vertikal aus und verpreßt in dieser Richtung die Innenstücke 7.1 aller Paßplatten 7, wodurch sich die Innenstücke 7.1 mit ihren Flanschen 22 gegen die Laibung 6 des Rahmens 4 anliegen und außerdem gegeneinander und gegen die Leitungen 1 abdichten.

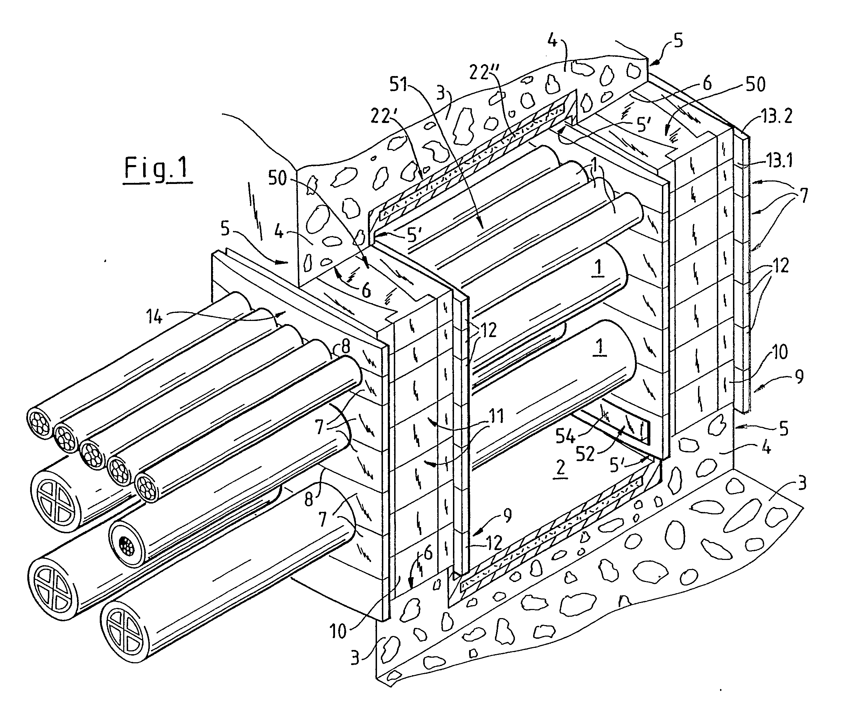

In der in Fig. 1 linken Dichtwand 50 ist der Hohlraum 52 aus einer zum Innenraum 51 zwischen beiden Dichtwänden 50 hin offenen taschenartigen Aussparung des Innenstücks 10.1 gebildet, in die ein die Aussparung verschließender Deckel 53 eingesetzt ist. In den Hohlraum 52 kann aber auch ein das Flammschutzmittel enthaltendes dünnwandiges Behältnis 54, eine Dose oder dergl., eingesetzt sein.

**Ansprüche**

1. Durchführung für Leitungen, wie Kabel, Rohre oder dergl., durch eine Wandöffnung, bestehend aus einem die Wandöffnung rundum begrenzenden Rahmen (4) mit einer Laibungsfläche (6) an jeder Rahmenseite und aus zwei in der Wandöffnung in Leitungslängsrichtung mit freiem Abstand zwischen sich hintereinander angeordneten, jeweils die Rahmenöffnung füllenden Dichtwänden (50) aus jeweils Paßplatten (7), die gegeneinander, gegen die Leitungen (1) und gegen die Laibungsfläche (6) abdichten, und aus einer die Paßplatten (7) im Rahmen (4) verpressenden Druckvorrichtung (9) mit einer Preßplatte (10), dadurch gekennzeichnet, daß die Paßplatten (7) und die Preßplatten (10) je in zwei in Leitungslängsrichtung hintereinander liegende und kraftschlüssig miteinander verbundene Stücke (7.1, 7.2 bzw 10.1, 10.2) unterteilt sind, von welchen die an den Dichtwänden (50) einander zugewandten Innenstücke (7.1, 10.1) aus einem elastisch weich eingestellten Kautschuk und die an den beiden Dichtwänden (50) voneinander abgewandten Außenstücke (7.2, 10.2) aus einem durch Zugabe von Flammschutzmitteln elastisch hart eingestellten Kautschuk bestehen, daß an jeder Dichtwand (50) ein dem Außenstück (10.2) anliegender Teil (10.1') des Innenstücks (10.1) der Preßplatte (10) in Leitungslängsrichtung gegen das Außenstück (10.2) verspannt ist, und daß im unverspannten Teil (10.1') des Innenstücks (10.1) der Preßplatte (10) jeder Dichtwand (50) ein sich im Brandfall zum Innenraum (51) zwischen beiden Dichtwänden (50) hin öffnender Hohlraum (52) mit einer Füllung aus einem Flammschutzmittel, insbesondere einem Flammschutzmittel, das sich bei Erwärmung im Brandfall unter Wärmeaufnahme (endogen) zersetzt und ein flammhemmendes Schutzgas abspaltet, wie Aluminiumhydroxid Al(OH)$_3$, vorgesehen ist.

2. Durchführung nach Anspruch 1, dadurch gekennzeichnet, daß die Stücke (7.1, 7.2 bzw 10.1, 10.2) der Paßplatten (7) bzw. Preßplatten (10) jeweils miteinander verklebt sind.

3. Durchführung nach Anspruch 1 oder 2, dadurch gekennzeichnet, daß die Innenstücke (7.1, 10.2) an ihren Enden je einen in Leitungslängsrichtung verbreiterten Flansch (22) aufweisen, dessen Ränder (24) formschlüssig in Falzen (25) der Außenstücke (7.2, 10.2) liegen.

4. Durchführung nach Anspruch 3, dadurch gekennzeichnet, daß der Flansch (22) sich zum Ende hin in der Dicke verjüngt und das Profil des Falzes (25) eine sich entsprechend verringernde Tiefe aufweist.

5. Durchführung nach einem der Ansprüche 1 bis 4, dadurch gekennzeichnet, daß in die Außen- und die Innenstücke (10.1, 10.2) der Preßplatte (10) im wesentlichen senkrecht zur Leitungslängsrichtung stehende starre Spannplatten (23), vorzugsweise aus Metall, eingelassen und mit in Leitungslängsrichtung verlaufenden Spannankern (26) durch den gegen das Außenstück (10.2) zu verspannenden Teil (10.1') des Innenstücks (10.1) hindurch miteinander verbunden sind, und daß sich der Hohlraum (52) mit dem Flammschutzmittel, gesehen vom Innenraum (51) zwischen den Dichtwänden (50) aus, im Innenstück (10.1) vor der Spannplatte (23) befindet.

6. Durchführung nach Anspruch 5, dadurch gekennzeichnet, daß die Spannplatten (23) und die Köpfe (27) der Spannanker (26) nach außen vom Außenstück (10.2) der Preßplatte (10) überdeckt sind.

7. Durchführung nach Anspruch 6, dadurch gekennzeichnet, daß das Außenstück (10.2) für jeden Spannanker (26) eine Durchgangsbohrung (28) zur Aufnahme des Spannankerkopfes (27) aufweist, in der der Spannankerkopf (27) versenkt angeordnet und durch einen Stopfen (29) aus demselben Material wie das Außenstück (10.2) verdeckt ist.

8. Durchführung nach einem der Ansprüche 1 bis 7, dadurch gekennzeichnet, daß die Spannanker (26) Gewindebolzen sind, auf welchen Spannmuttern als Spannankerköpfe (27) sitzen.

9. Durchführung nach Anspruch 8, dadurch gekennzeichnet, daß die Spannmuttern als Hutmuttern ausgebildet sind.

10. Durchführung nach einem der Ansprüche 1 bis 9, dadurch gekennzeichnet, daß zusätzlich zu den Spannankern (26) Führungsstifte (30) vorgesehen sind, welche die Spannplatten (23) verbinden und auf denen die Spannplatten (23) mit Führungsbohrungen (31) parallel zueinander geführt sind.

11. Durchführung nach Anspruch 10, dadurch gekennzeichnet, daß auch die Enden der Führungsstifte (30) im Außenstück (10.2) der Preßplatte (10) versenkt angeordnet und nach außen hin vom Außenstück (10.2) überdeckt sind.

12. Durchführung nach den Ansprüchen 3 und 5, dadurch gekennzeichnet, daß die Spannplatten (23) das Innenstück (10.1) und das Außenstück (10.2) in jeweils zwei Teile (a, b) trennen, von welchen das zum Innenraum (51) zwischen beiden Dichtwänden (50) hin liegende innere Teil (b) des Innenstücks (10.1) den Hohlraum (52) mit dem Flammschutzmittel aufweist, daß die beiden Teile (a, b) von Innen- und Außenstück (10.1, 10.2) die Enden der Spannplatten (23) zu der Laibungsfläche (6) hin übergreifen und abdecken, und daß das Außenstück (10.2) mit seinen beiden Teilen (a, b), die Spannplatten (23) und das dem Außenstück (10.2) anliegende Teil (10.1') des Innenstücks (10.1) auf den Spannankern (26) und/oder den Führungsstiften (30) geführt sind.

13. Durchführung nach einem der Ansprüche 1 bis 12, dadurch gekennzeichnet, daß der Hohlraum (52) von einer zum Innenraum (51) zwischen beiden Dichtwänden (50) hin offenen taschenartigen Aussparung des Innenstücks (10.1) gebildet ist, in die ein die Aussparung verschließender Deckel (53) gesetzt ist.

14. Durchführung nach einem der Ansprüche 1 bis 12, dadurch gekennzeichnet, daß in den Hohlraum (52) ein das Flammschutzmittel enthaltendes dünnwandiges Behältnis (54) eingesetzt ist.

Fig.1

EP 0 333 982 A1

Fig.2

Fig.4

Fig.3

EP 0 333 982 A1

Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 637 611 (R. DÖPFL) <br> * Seite 1, Zusammenfassung; Figur 1 * <br> --- | 1 | F 16 L 5/02 <br> H 02 G 3/22 |
| A | DE-A-2 524 113 (G. STAUDT) <br> * Seite 4, Zeile 32 - Seite 5, Zeile 11; Figuren * <br> ----- | 1 | |
| | | | RECHERCHIERTE SACHGEBIETE (Int. Cl.4) <br><br> F 16 L <br> H 02 G |

Der vorliegende Recherchenbericht wurde für alle Patentansprüche erstellt

| Recherchenort | Abschlußdatum der Recherche | Prüfer |
|---|---|---|
| DEN HAAG | 29-06-1989 | HUBEAU M.G. |